# EUROPÄISCHE PATENTSCHRIFT

(11) **EP 1 573 280 B1**
(45) Veröffentlichungstag und Bekanntmachung des Hinweises auf die Patenterteilung: **24.11.2010**
(21) Anmeldenummer: 03757986.9
(22) Anmeldetag: 16.10.2003
(51) Int. Cl.: G01F 23/26

(54) **VORRICHTUNG UND VERFAHREN ZUR KAPAZIT TSMESSUNG SOWIE EINRIC HTUNG ZUM ERMITTELN DES F LLSTANDES EINER FL SSIGKEIT M IT EINER SOLCHEN VORRICHTUNG**
DEVICE AND METHOD FOR MEASURING CAPACITANCE AND DEVICE FOR DETERMINING THE LEVEL OF A LIQUID USING ONE SUCH DEVICE
DISPOSITIF ET PROCEDE POUR MESURER LA CAPACITE ET DISPOSITIF POUR DETERMINER LE NIVEAU D'UN LIQUIDE AU MOYEN DUDIT DISPOSITIF

(30) Priorität: 19.12.2002 DE 10261767
(43) Veröffentlichungstag der Anmeldung: 14.09.2005
(73) Patentinhaber: Hydac Electronic GmbH, 66128 Saarbrücken (DE)
(72) Erfinder: QU, Wenmin, 66386 St. Ingbert (DE); GAMEL, Frédéric, Julien, F-57800 Betting-lés-Saint-Avold (FR); MANNEBACH, Horst, 56294 Münstermaifeld (DE); JIRGAL, Mathias, Leo, 66126 Saarbrücken (DE)
(74) Vertreter: Crazzolara, Helmut
(86) Internationale Anmeldenummer: PCT/EP2003/011449
(87) Internationale Veröffentlichungsnummer: WO 2004/057281

(56) Entgegenhaltungen:
- DE-A- 10 015 306
- US-A- 4 003 259
- US-A- 6 101 873

## Beschreibung

Die Erfindung betrifft eine Vorrichtung zur Kapazitätsmessung gemäß dem Oberbegriff des Anspruchs 1 sowie ein entsprechendes Verfahren und eine Einrichtung zum Ermitteln des Füllstandes einer Flüssigkeit mit einer solchen Vorrichtung.

Aus dem Stand der Technik, beispielsweise aus US-A-6 101 873, US-A-4 003 259 und der Veröffentlichung TOTH, F.N. und weitere: A new capacitive precision liquid-level sensor, Digest 1996 Conference on Precision Electromagnetic Measurements, Braunschweig, sind gattungsgemäße Vorrichtungen bekannt. Dabei werden parallel zu einer Reihe von hintereinander angeordneten Meßelektroden einseitig oder beidseitig benachbart langgestreckte Schutz- und Bezugspotential-Elektroden ("guard" und "E₀") angeordnet. Eine Kapazitäts- und damit letztlich Füllstandsmessung erfolgt durch Messung der Kapazität zwischen den einzelnen Meßelektroden und der gegenüberliegenden langgestreckten Bezugspotential-Elektrode.

Derartige Vorrichtungen erfordern einen hohen Verschaltungsaufwand und damit hohe Herstellungs- und Montagekosten. Daneben müssen besondere Vorkehrungen getroffen werden, um eine hohe Auflösung bei geringer Empfindlichkeit für Störsignale zu erreichen.

Der Erfindung liegt die Aufgabe zugrunde, eine Vorrichtung bereitzustellen, welche die Nachteile des Standes der Technik überwindet. Außerdem soll ein zugehöriges Verfahren sowie eine entsprechende Einrichtung zum Ermitteln des Füllstandes einer Flüssigkeit in einem Behälter bereitgestellt werden. Die erfindungsgemäße Vorrichtung soll insbesondere kostengünstig in der Herstellung und Montage und dauerhaft zuverlässig im Betrieb sein. Die Auflösung und die (Un-)Empfindlichkeit für Störsignale soll weiter optimiert sein.

Diese Aufgabe ist durch die im Anspruch 1 bestimmte Vorrichtung sowie durch das im nebengeordneten Anspruch bestimmte Verfahren und die im ebenfalls nebengeordneten Anspruch bestimmte Einrichtung zum Ermitteln des Füllstandes gelöst. Besondere Ausführungsarten der Erfindung sind in den Unteransprüchen bestimmt.

Die Aufgabe ist mit einer Vorrichtung zur Kapazitätsmessung gemäß Anspruch 1 gelöst.

Vorzugsweise sind die Elektroden auf einer Fläche angeordnet, insbesondere auf einer ebenen Fläche. In einer besonderen Ausführungsart sind die Elektroden rechteckförmig und mit ihren Längsseiten nebeneinander angeordnet. Der Abstand der Elektroden ist vorzugsweise möglichst gering, insbesondere kleiner als die Hälfte, und vorzugsweise kleiner als 1/5 des Abstandes von einer Elektrode zur nächsten. Für viele Anwendungsfälle ist es vorteilhaft, die Elektroden auf einem flexiblen Träger anzuordnen, beispielsweise auf einer Folie aus Polymerkunststoff wie etwa Polyimid. Besonders vorteilhaft für den flexiblen Träger und/oder für ein den Träger gegebenenfalls umgebendes Rohr ist die Verwendung von Werkstoffen, die einen geringen Temperaturkoeffizienten ihrer Dielektrizitätszahl aufweist, wie beispielsweise Polypropylen.

Der Elektrodenträger ist vorzugsweise mit den Elektroden in stabiler Anlage an der Innenseite des Rohres festgelegt oder angedrückt. Beispielsweise kann der Elektrodenträger auf ein federelastisch verformbares Innenrohr aufgespannt sein, das in das Rohr eingesteckt wird. Zur mechanischen Stabilisierung kann das Innenrohr aufgefüllt werden, insbesondere ausgeschäumt werden.

Das Rohr kann auf seiner zur Flüssigkeit gewandten Seite mindestens teilweise, vorzugsweise vollflächig, mit einer Beschichtung versehen sein, die aufgrund des für die Beschichtung gewählten Werkstoffe beispielsweise einen hohen Perleffekt der Flüssigkeit hervorruft und daher die Benetzung mit Flüssigkeit herabsetzt, und/oder eine Diffusion der Flüssigkeit in das Rohr verhindert. Derartige Beschichtungen können beispielsweise einen Polymerkunststoff enthalten und durch Lackieren oder durch ein Tauchbad auf das Rohr aufgebracht werden.

Vorzugsweise sind die Elektroden nicht nur gegeneinander elektrisch isoliert, sondern auch mit einer elektrisch isolierenden Schicht auf dem vom Träger abgewandten Seite abgedeckt. Vorteilhaft ist es, wenn die Elektroden zusammen mit Anschlußleiterbahnen auf dem Träger in Dünn- oder Dickschichttechnik aufgebracht sind. Das Aufbringen kann dabei strukturiert erfolgen, beispielsweise durch Siebdruck oder Stempeln. Alternativ oder ergänzend dazu kann der Auftrag auch ganzflächig erfolgen und anschließend die ganzflächige Schicht strukturiert werden, beispielsweise unter Verwendung von photolithographischen Strukturierungsverfahren, wie sie beispielsweise aus der Halbleitertechnologie oder der Technik hybrider Mikroschaltungen bekannt sind.

In einer besonderen Ausführungsart weist die Vorrichtung eine Verbindungseinrichtung zum elektrischen Anschließen weiterer Sensoren und/oder zum Verbinden mit der Schalteinrichtung auf. Der Anschluß weiterer Sensoren und/oder der Schalteinrichtung erfolgt vorzugsweise lösbar und/oder erforderlichenfalls dicht gegenüber umgebenden Flüssigkeiten.

Es können Sensoren vorgesehen werden, die keinen unmittelbaren Kontakt zur Flüssigkeit erfordern, beispielsweise ein Temperatursensor; in diesem Fall kann der Sensor innerhalb des Rohres angeordnet sein, beispielsweise auf dem Elektrodenträger und von den dort vorhandenen Leiterbahnen unmittelbar elektrisch kontaktiert werden.

Alternativ oder ergänzend können Sensoren vorgesehen sein, die in unmittelbaren Kontakt mit der Flüssigkeit zu bringen sind, beispielsweise ein Viskositätssensor; in diesem Fall muß der Sensor außerhalb des Rohres angeordnet sein, und die elektrische Verbindung erfolgt über eine flüssigkeitsdichte elektrische Durchführung in dem Rohr, insbesondere an dessen Bodenfläche. Vorzugsweise ist eine lösbare Steckverbindung vorgesehen.

Weitere Sensoren können beispielsweise Sensoren für Feuchtigkeit, Druck oder dergleichen sein, oder auch ein zusätzlicher kapazitiver Sensor, mit dem ein die Vorrichtung umgebendes Medium hinsichtlich dessen Dielektrizitätszahl untersucht wird. Vorzugsweise sind auch die Anschlußleiterbahnen für die zusätzlichen Sensoren auf dem Träger der Vorrichtung angebracht.

Weiterhin können auch mindestens Teile der steuerbaren Schalteinrichtung oder auch der Meßeinrichtung auf dem Träger der Vorrichtung angeordnet sein. Grundsätzlich ist es auch möglich, als Träger für die Elektrodenanordnung das gleiche Substrat zu verwenden, wie es für die Schalteinrichtung und/oder Meßeinrichtung verwendet wird. Der Grad der Integration der Bauelemente richtet sich letztlich nach dem jeweiligen Anwendungsfall ebenso wie nach den Anforderungen an die Baugröße der Vorrichtung, für die es bedingt durch die Funktion der Vorrichtung untere und/oder obere Grenzen geben kann.

In einer besonderen Ausführungsart der Erfindung ist das vorgebbare Bezugspotential das Massepotential der Meßeinrichtung. Dadurch lassen sich auf schaltungstechnisch besonders einfache und gleichzeitig sehr genaue Weise die Kapazitätswerte der geschalteten Elektroden messen. Vorzugsweise wird für die Meßeinrichtung das sogenannte "charge transfer" Verfahren eingesetzt. Übliche Werte der zu messenden Kapazität, beispielsweise bei der Verwendung der erfindungsgemäßen Vorrichtung als Füllstandssensor, liegen im Bereich von Bruchteilen eines pF bis einige Hundert pF, können aber in Abhängigkeit des Mediums, insbesondere dessen Dielektrizitätszahl, und/oder der Elektrodenflächen und Eiektrodenabstände darüber oder darunter liegen.

Alle Elektroden, die nicht als Meßelektroden geschaltet sind, werden auf das Bezugspotential geschaltet, insbesondere auf Massepotential. Im Falle eines Füllstandssensors ist es außerdem vorteilhaft, auch die Flüssigkeit und/oder mindestens einen Teil der Wand des Behälters auf dieses oder ein anderes vorgebbares Bezugspotential zu schalten.

Alle Elektroden weisen vorzugsweise eine im wesentlichen identische Kontur und Fläche auf. Vorzugsweise sind alle Elektroden im wesentlichen äquidistant zueinander und/oder zu den Anschlußleitungen angeordnet. Dadurch ergibt sich nicht nur eine vereinfachte Herstellung der Vorrichtung, sondern die gemessenen Kapazitätswerte und Kapazitätsänderungen sind auch grundsätzlich in der gleichen Größenordnung. Gerade beim abwechselnden Durchschalten erweist es sich darüber hinaus als vorteilhaft, daß durch die Gleichartigkeit der Elektroden die Zuverlässigkeit der Vorrichtung erhöht ist. Außerdem ist durch die erfindungsgemäß nicht erforderliche langgestreckte und großflächige Bezugspotential-Elektrode der Flächenbedarf der Elektrodenanordnung deutlich herabgesetzt, oder es können die Elektroden bei gleichem Flächenbedarf größer sein, wodurch die Meßempfindlichkeit und/oder die Meßgenauigkeit erhöht ist.

Zwecks Erhöhung der Meßgenauigkeit bei vorgegebener Gesamtgröße der Vorrichtung ist es auch möglich, daß mehrere, jeweils vorzugsweise nicht unmittelbar benachbarte Elektroden, zu jeweils einer Elektrodengruppe fest verdrahtet verschaltet sind. Durch die Schaltvorrichtung wird abwechselnd jede Elektrodengruppe als Meßelektrode geschaltet und dabei alle weitere Elektroden als Gegenelektrode auf das vorgebbare Bezugspotential geschaltet. Dies entspricht einer Aufteilung der einzelnen Elektroden in verschiedene Teilsegmente. Die fest verdrahtete Verschaltung der Elektroden zu der jeweiligen Elektrodengruppe erfolgt vorzugsweise am Ort der Anschlußleitungen, insbesondere jeweils auf Höhe der betreffenden Elektrode, so daß auch hinsichtlich der Anschlußleitungen kein erhöhter Platzbedarf entsteht.

Die Erfindung betrifft auch ein Verfahren zur Kapazitätsmessung nach Anspruch 9.

Außerdem betrifft die Erfindung eine Einrichtung zum Ermitteln des Füllstandes einer Flüssigkeit in einem Behälter mit einer vorstehend beschriebenen Vorrichtung. Dabei wird in einer der eigentlichen Meßeinrichtung nachgeordneten Auswerteeinrichtung die gemessene Kapazität mit gespeicherten Referenzwerten verglichen. Diese Referenzwerte können fest vorgegeben und unveränderlich sein, oder es können abhängig von der Anwendung Referenzwerte eingespeichert werden, insbesondere abhängig von der jeweiligen Flüssigkeit, und gegebenenfalls auch abhängig von den Signalen der weiteren Sensoren wie insbesondere der Temperatur. Weiterhin können abgespeicherte Referenzwerte entsprechend einem vorgegebenen Algorithmus an die aktuellen tatsächlichen Randbedingungen wie beispielsweise Temperatur oder Viskosität der Flüssigkeit angepaßt werden.

Vorzugsweise sind die Elektroden auf dem Träger bei einer derartigen Einrichtung in Eintauchrichtung hintereinander angeordnet. Beim Ermitteln des Füllstandes wird zunächst in einem ersten Schritt anhand von gespeicherten Referenzwerten oder fest vorgegebenen Erwartungswerten eine Klassifizierung der einzelnen Elektroden in "eingetaucht", "nicht eingetaucht" und "teilweise eingetaucht" vorgenommen. Das Ergebnis dieser Klassifizierung liefert diskrete Werte, beispielsweise "0" für "nicht eingetaucht", "1" für "teilweise eingetaucht" und "2" für "eingetaucht".

Anschließend erfolgt ein Interpolationsschritt zur Ermittlung des Füllstandes im Bereich der teilweise eingetauchten Elektrode. Die in diesem zweiten, quasi analogen Bestimmungsschritt erreichbare Genauigkeit hängt von der Höhe h der einzelnen Elektroden in Eintauchrichtung sowie auch von dem Kurvenverlauf der Kapazität über dem Füllstand ab.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt in vereinfachter Darstellung eine erfindungsgemäße Einrichtung,
- Fig. 2: zeigt in vergrößerter Darstellung die Anordnung der Elektroden,
- Fig. 3: zeigt den Verlauf der gemessenen Kapazität gegen Masse über dem Füllstand,
- Fig. 4: zeigt in vergrößerter Darstellung das untere Ende des Trägers,
- Fig. 5: zeigt eine alternative Ausführungsform der Elektrodenanordnung,
- Fig. 6: zeigt den Verlauf der gemessenen Kapazität gegen Masse über dem Füllstand für die Ausführungsform der Fig. 5.

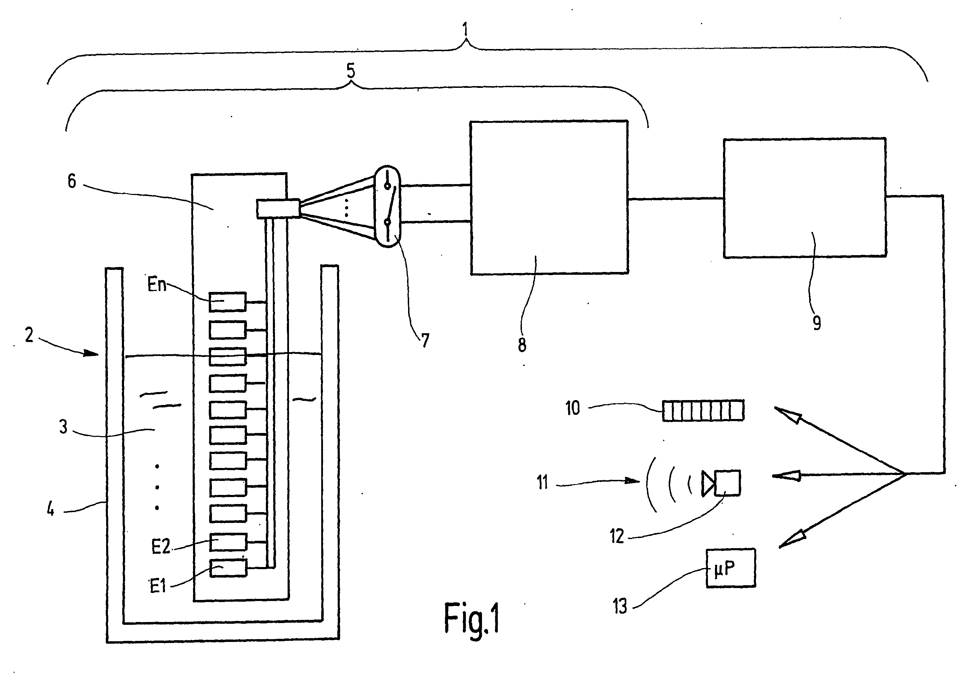

Die Fig. 1 zeigt in vereinfachter Darstellung eine erfindungsgemäße Einrichtung 1 zum Ermitteln des Füllstandes 2 einer Flüssigkeit 3 in einem Behälter 4 mit einer erfindungsgemäßen Vorrichtung 5 zur Kapazitätsmessung mit einer Elektrodenanordnung bestehend aus einer Vielzahl von hintereinander auf einem Träger 6 angeordneten Elektroden E 1 bis En. Die Vorrichtung 5 weist weiterhin auf eine eigentliche Meßeinrichtung 8 zum Messen der Kapazität zwischen einer ersten Elektrode E2 als Meßelektrode und einer zweiten Elektrode E1 als Gegenelektrode. Weiterhin weist die Vorrichtung 5 auf eine steuerbare Schalteinrichtung 7 zum vorgebbar schaltbaren Verbinden der Elektroden E1 bis En als erste und zweite Elektroden E2, E1 mit der Meßeinrichtung 8.

Die Einrichtung 1 zum Ermitteln des Füllstandes 2 der Flüssigkeit 3 umfaßt weiterhin eine der Meßeinrichtung 8 nachgeordnete Auswerteeinrichtung 9, die aus der von der Vorrichtung 5 gemessenen Kapazität durch Vergleich mit gespeicherten Referenzwerten den Füllstand 2 ermittelt. Dieser Füllstand 2 ist von der Auswerteeinrichtung 9 auf verschiedene und beliebige Weise aus- und weitergebbar, beispielsweise anhand einer digitalen Anzeige 10, einer Sprachausgabe oder eines Warnsignals 11 mittels eines Lautsprechers 12, oder zur Weiterverarbeitung an eine Steuereinheit 13.

Die steuerbare Schalteinrichtung 7, die Meßeinrichtung 8 und die Auswerteeinrichtung 9 sind vorzugsweise in einem Mikrocontroller oder Mikroprozessor integriert, insbesondere in einem einzigen Halbleiterchip, einschließlich eines Speichers für Referenz-Kapazitätswerte und für das Steuerprogramm.

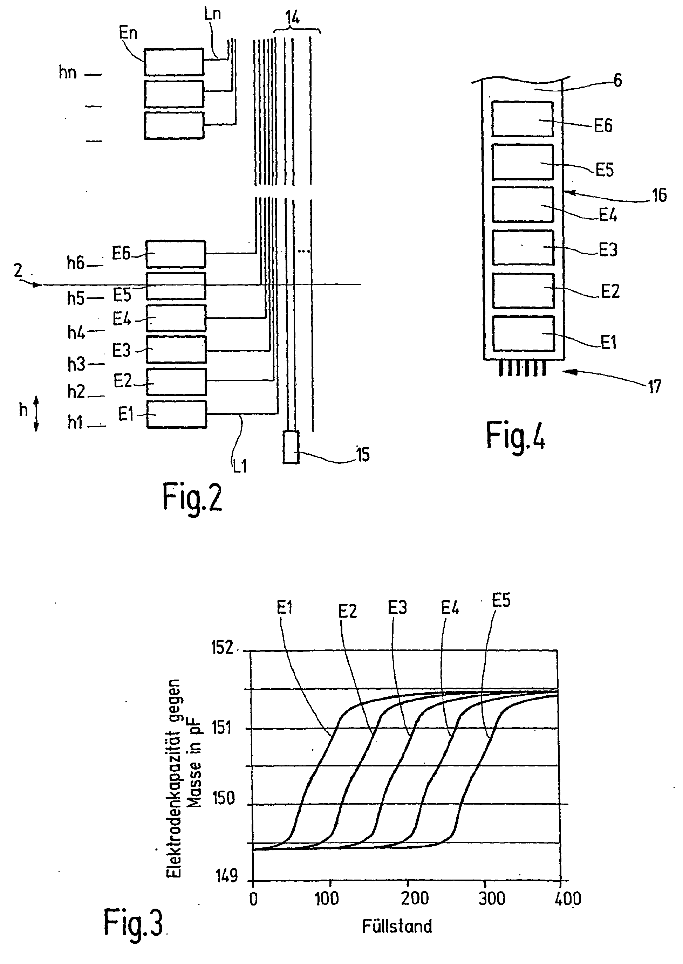

Die Figur 2 zeigt in vergrößerter Darstellung die Anordnung der Elektroden E1 bis En; aus Gründen der Übersichtlichkeit ist der Träger 6 nicht dargestellt. Alle Elektroden E1 bis En sind rechteckförmig und parallel zu ihren Längsseiten hintereinander auf dem Träger 6 angeordnet.
Die Unterkanten der Elektroden E1 bis En sind mit den Füllstandshöhen h1 bis hn markiert. Der Abstand von zwei beliebigen Elektroden E1 bis En beträgt konstant h. Die Verbindungsleitungen L1 bis Ln zu den einzelnen Elektroden E1 bis En werden nach oben zur Meßelektronik, insbesondere zunächst zur Schalteinrichtung 7 geführt. Parallel hierzu laufen weitere Verbindungsleitungen 14, mit denen weitere auf dem Träger 6 angeordnete Sensoren kontaktiert werden können, beispielsweise ein Temperatursensor 15 am unteren Ende in der Nähe der untersten Elektrode E1.

In einer bevorzugten Ausführungsform werden die Elektroden E1 bis En und Verbindungsleitungen L1 bis Ln auf einer sogenannten Flexleiterfolie angebracht, d.h. auf einem sehr biegsamen dünnen Substrat. Die Flexleiterfolie wird in einem elektrisch isolierenden Rohr angeordnet, das vorzugsweise aus einem Material mit einem Dielektrizitätskoeffizienten mit kleinem Temperaturkoeffizienten besteht, wie beispielsweise Polypropylen. Die Meßeinrichtung 8 bestimmt die Kapazität zwischen jeweils einer ersten Elektrode E2, die als Meßelektrode dient, und mindestens einer weiteren Elektrode E1, die auf das Massepotential der Meßeinrichtung 8 gelegt ist. In einer besonderen Ausführungsart werden alle übrigen Elektroden, die nicht als Meßelektrode geschaltet sind, von der Schalteinrichtung 7 auf Massepotential geschaltet.

Vorzugsweise ist jedenfalls die der ersten Elektrode E2 benachbarte, insbesondere nach unten benachbarte Elektrode als zweite Elektrode E1 geschaltet. Weiter vorzugsweise ist auch die Flüssigkeit 3 und/oder jedenfalls eine Wand des Behälters 4 mit dem Bezugspotential verbunden, insbesondere nach Masse geschaltet.

Die Kapazität der ganz oder teilweise eingetauchten Elektroden E1 bis E5, die unterhalb des Füllstandes 2 angeordnet sind, ist jedenfalls bei Flüssigkeiten mit einer Dielektrizitätszahl von mehr als eins größer als die Kapazität der oberhalb des Füllstandes 2 angeordneten Elektroden E6 bis En. Aus den gemessenen Kapazitäten wird der Füllstand 2 ermittelt.

Die Bestimmung des Füllstandes 2 erfolgt dabei in zwei Schritten: Zunächst erfolgt eine Klassifizierung der Elektroden E1 bis E4 in "eingetaucht", E6 bis En in "nicht eingetaucht" und E5 in "teilweise eingetaucht". Anschließend kann erforderlichenfalls noch eine Interpolation unter Verwendung des für die Elektrode E5 gemessenen Kapazitätswertes erfolgen, so daß der genaue Füllstand im Bereich der teilweise eingetauchten Elektrode E5 ermittelt werden kann.

In der Figur 3 ist ein Verlauf der gemessenen Kapazität gegen Masse über dem Füllstand dargestellt. Der Unterschied des Kapazitätswertes zwischen "nicht eingetauchtem" und "eingetauchtem" Zustand einer Elektrode E1 bis E5 beträgt im dargestellten Ausführungsbeispiel etwa 2 pF bei einer Grundkapazität von etwa 150 pF. Neben der geometrischen Elektrodenanordnung ist dieser Kapazitätsunterschied selbstverständlich vor allem abhängig von der Dielektrizitätszahl der Flüssigkeit und mithin bei polaren Flüssigkeiten wie Wasser größer als bei im wesentlichen unpolaren Flüssigkeiten wie Öl. Der Verlauf der Kapazitätsänderung ist bei allen Elektroden aufgrund der symmetrischen Anordnung im wesentlichen identisch und geprägt von einem nahezu linearen mittleren Steigungsverlauf, dessen Anfang und Ende aufgrund von Randeffekten verrundet sind.

Die Figur 4 zeigt in vergrößerter Darstellung das untere Ende des Trägers 6, der im dargestellten Ausführungsbeispiel als Flexleiterfolie aufgeführt ist, die in ein elektrisch isolierendes Rohr 16 eingebracht ist. Am unteren geschlossenen Ende weist das Rohr 16 einen elektrischen Steckanschluß 17 auf, für das elektrische Anschließen weiterer Sensoren, beispielsweise eines Viskositätssensors.

Zur Erhöhung der Meßgenauigkeit bei vorgegebener Gesamtlänge des Füllstandssensors muß die Höhe h der Elektroden verringert werden. Dadurch würde sich die Anzahl der Elektroden erhöhen, wodurch die Anzahl der Signalleitungen L1 bis Ln und auch der Verschaltungsaufwand erhöht wäre.

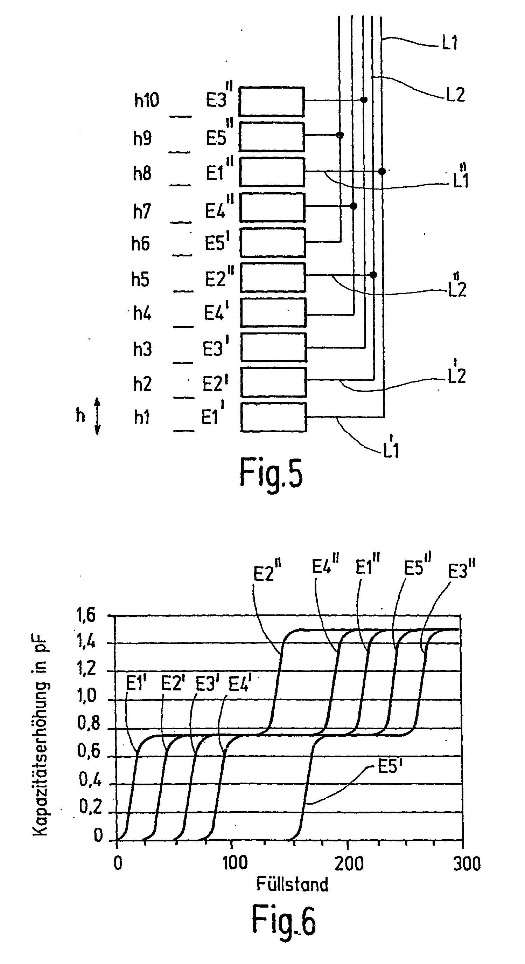

Die Figur 5 zeigt eine alternative Ausführungsform der Elektrodenanordnung einer erfindungsgemäßen Vorrichtung. Dabei sind fünf einzelne Elektroden E1 bis E5 in jeweils zwei Teilsegmente E1', E1 ", ... bis E5', E5" aufgeteilt. Dadurch kommt es zu einer Erhöhung der Kapazität zwischen der jeweiligen Meßelektrode und dem Massepotential in mehreren Teilstufen, im dargestellten Ausführungsbeispiel in jeweils zwei Teilstufen. Die Interpolation im zweiten Schritt der Signalauswertung wird dadurch genauer.

Das dargestellte Ausführungsbeispiel zeigt insgesamt fünf Elektroden, die in jeweils zwei gleich große Segmente aufgeteilt sind. Denkbar ist jede andere Aufteilung, beispielsweise auch vier Elektroden in je drei Teilsegmente, sechs Elektroden in je vier Teilsegmente usw. Die Anschlußleitungen der jeweiligen Teilsegmente sind unmittelbar auf dem Träger 6 fest verdrahtet miteinander verbunden.

Im dargestellten Ausführungsbeispiel ist nach wie vor die Elektrode E1 mit den beiden Teilsegmenten E1', E1" mit einer einzigen Anschlußleitung L1 kontaktierbar. Die Teilsegmente E1' und E1" der ersten Elektrode sind unter Bildung einer ersten Elektrodengruppe fest verdrahtet zusammengeschaltet. Diese Festverdrahtung der im Ausführungsbeispiel insgesamt fünf Elektrodengruppen erfolgt vorzugsweise sowohl hinsichtlich der Anzahl der in einer Gruppe zusammengefassten Elektroden als auch hinsichtlich der Relativposition der in einer Gruppe zusammengefassten Elektroden in Bezug auf die gesamte Elektrodenanordnung derart, daß die von der Einrichtung 1 zum Ermitteln des Füllstandes 2 vorzunehmende Zuordnung des gemessenen Kapazitätswerts zu einem daraus resultierenden Füllstand 2 eindeutig ist, insbesondere Mehrdeutigkeiten vermieden sind.

Die Figur 6 zeigt den Verlauf der gemessenen Kapazität gegen Masse über dem Füllstand für die Ausführungsform der Fig. 5. Die Beobachtung einer aktuellen Erhöhung der Kapazität einer einzelnen Elektrode E1 bis E5 liefert in der Regel keine eindeutige Aussage über die Anzahl der eingetauchten Teilsegmente E1' bis E5". Es ist daher vorteilhaft, zunächst für alle Elektroden E1 bis En eine Klassifizierung in "eingetaucht", "teilweise eingetaucht" und "nicht eingetaucht" vorzunehmen. Dies erfolgt vorzugsweise dadurch, daß die Kapazitätswerte für "nicht eingetaucht" bekannt sind oder vorab ermittelt und abgespeichert wurden. Nachdem eine Klassifizierung aller Elektroden stattgefunden hat, ist eine eindeutige Zuordnung der gemessenen Kapazitätswerte zu einem Füllstand 2 möglich.

## Patentansprüche

1. Vorrichtung (5) zur Kapazitätsmessung mit einer Elektrodenanordnung bestehend aus einer Vielzahl von nebeneinander und/oder hintereinander auf einem Träger (6) angeordneten Elektroden (E1, E2, ..., En), einer eigentlichen Meßeinrichtung (8) zum Messen der Kapazität zwischen einer ersten Elektrode (E2) als Meßelektrode und einer zweiten Elektrode (E1) als Gegenelektrode, sowie einer steuerbaren Schalteinrichtung (7) zum vorgebbar schaltbaren Verbinden der Elektroden (E1, E2, ..., En) als erste und zweite Elektroden (E2, E1) mit der Meßeinrichtung (8), wobei durch die Schalteinrichtung (7) gesteuert abwechselnd jede Elektrode (E1, E2, ..., En) der Elektrodenanordnung als Meßelektrode schaltbar ist und dabei jeweils mindestens eine der weiteren Elektroden (E1, E2, ..., En) als Gegenelektrode auf ein vorgebbares Bezugspotential schaltbar ist, **dadurch gekennzeichnet, daß** alle Elektroden (E1, E2,..., En), die nicht als Meßelektrode geschaltet sind, als Gegenelektrode geschaltet sind, und daß alle als Gegenelektrode geschalteten Elektroden (E1, E2,..., En) auf das Bezugspotential geschaltet sind.

2. Vorrichtung (5) nach Anspruch 1, **dadurch gekennzeichnet, daß** das vorgebbare Bezugspotential das Massepotential der Meßeinrichtung (8) ist.

3. Vorrichtung (5) nach einem der Ansprüche 1 bis 2, **dadurch gekennzeichnet, daß** alle Elektroden (E1, E2, ..., En) eine im wesentlichen identische Kontur und Fläche aufweisen.

4. Vorrichtung (5) nach einem der Ansprüche 1 bis 3, **dadurch gekennzeichnet, daß** alle Elektroden (E1, E2, ..., EN) im wesentlichen äquidistant angeordnet sind.

5. Vorrichtung (5) nach einem der Ansprüche 1 bis 4, **dadurch gekennzeichnet, daß** mehrere, vorzugsweise jeweils nicht unmittelbar benachbarte Elektroden (E1', E1 "; E2', E2";...; En', En") zu jeweils einer Elektrodengruppe fest verdrahtet verschaltet sind, und daß durch die Schaltvorrichtung (7) gesteuert abwechselnd jede Elektrodengruppe als Meßelektrode schaltbar ist und dabei die anderen Elektrodengruppen als Gegenelektrode auf das Bezugspotential schaltbar ist.

6. Vorrichtung (5) nach einem der Ansprüche 1 bis 5, **dadurch gekennzeichnet, daß** die Elektroden (E1, E2, ..., En) zusammen mit Anschlußleiterbahnen (14) auf dem Träger (6) in Dünn- oder Dickschichttechnik aufgebracht sind.

7. Vorrichtung (5) nach einem der Ansprüche 1 bis 6, **dadurch gekennzeichnet, daß** die Vorrichtung (5) eine Verbindungseinrichtung (17) zum Anschließen weiterer Sensoren (15) und/oder zum Verbinden mit der Schalteinrichtung (7) aufweist.

8. Vorrichtung (5) nach einem der Ansprüche 1 bis 7, **dadurch gekennzeichnet, daß** die steuerbare Schalteinrichtung 7, die Meßeinrichtung 8 und vorzugsweise auch eine nachgeordnete Auswerteeinrichtung 9 in einem Mikrocontroller oder Mikroprozessor integriert sind.

9. Verfahren zur Kapazitätsmessung mit einer Elektrodenanordnung bestehend aus einer Vielzahl von nebeneinander und/oder hintereinander auf einem Träger (6) angeordneten Elektroden (E1, E2, ..., En), einer eigentlichen Meßeinrichtung (8) zum Messen der Kapazität zwischen einer ersten Elektrode (E2) als Meßelektrode und einer zweiten Elektrode (E1) als Gegenelektrode, sowie einer steuerbaren Schalteinrichtung (7), mittels der die Elektroden (E1, E2, ..., En) als erste und zweite Elektroden (E2, E1) mit der Meßeinrichtung (8) vorgebbar schaltbar verbunden werden, wobei durch die Schalteinrichtung (7) gesteuert abwechselnd jede Elektrode (E1, E2, ..., En) der Elektrodenanordnung als Meßelektrode.geschaltet wird und dabei jeweils mindestens eine der weiteren Elektroden (E1, E2, ..., En) als Gegenelektrode auf ein vorgebbares Bezugspotential geschaltet wird, **dadurch gekennzeichnet, daß** alle Elektroden (E1, E2,..., En), die nicht als Meßelektrode geschaltet sind, alls Gegenelektrode geschaltet werden, und daß alle als Gegenelektrode geschalteten Elektroden (E1 E2,...., En) auf das Bezugspotential geschaltet werden.

10. Verfahren nach Anspruch 9, **dadurch gekennzeichnet daß** die Schalteinrichtung von einem Mikroprozessor gemäß einem gespeicherten Steuerprogramm gesteuert wird.

11. Einrichtung (1) zum Ermitteln des Füllstandes (2) einer Flüssigkeit (3) in einem Behälter (4) mit einer Vorrichtung (5) nach einem der Ansprüche 1 bis 8 und einer der eigentlichen Meßeinrichtung (8) nachgeordnete Auswerteeinrichtung (9), die aus der von der Vorrichtung (5) gemessenen Kapazität durch Vergleich mit gespeicherten Referenzwerten den Füllstand (2) ermittelt.

12. Einrichtung (1) nach Anspruch 11, **dadurch gekennzeichnet, daß** auch die Flüssigkeit (3) und/oder mindestens Teile einer Wand des Behälters (4) auf das Bezugspotential geschaltet sind.

13. Einrichtung (1) nach Anspruch 11 oder 12, **dadurch gekennzeichnet, daß** in der Vorrichtung (5) zur Kapazitätsmessung mehrere, vorzugsweise jeweils nicht unmittelbar benachbarte Elektroden (E1', E1"; ...; E5', E5") zu jeweils einer Elektrodengruppe fest verdrahtet verschaltet sind, und daß durch die Schaltvorrichtung (7) gesteuert abwechselnd jede Elektrodengruppe als Meßelektrode schaltbar ist und dabei die anderen Elektrodengruppen als Gegenelektrode auf das Bezugspotential schaltbar sind.

14. Einrichtung (1) nach einem der Ansprüche 11 bis 13, **dadurch gekennzeichnet, daß** die Verschaltung der Elektrodengruppen sowohl hinsichtlich der Anzahl der in einer Gruppe zusammehgefaßten Elektroden als auch hinsichtlich der Relativposition der in einer Gruppe zusammengefaßten Elektroden in Bezug auf die gesamte Elektrodenanordnung so erfolgt, daß die von der Einrichtung (1) zum Ermitteln des Füllstandes (2) vorzunehmende Zuordnung des gemessenen Kapazitätswertes zu einem daraus resultierenden Füllstand (2) eindeutig ist.

15. Einrichtung (1) nach einem der Ansprüche 11 bis 14, **dadurch gekennzeichnet, daß** die Elektroden an der Innenseite eines in die Flüssigkeit eintauchbaren Rohres (16) angeordnet sind.

16. Einrichtung (1) nach Anspruch 15, **dadurch gekennzeichnet, daß** das Rohr (16) auf seiner der Flüssigkeit zugewandten Seite mindestens teilweise, vorzugsweise vollflächig, eine Beschichtung aufweist.

## Claims

1. A device (5) for measuring capacity comprising an electrode arrangement consisting of a plurality of electrodes (E1, E2, ..., En) which are adjacently and/or successively arranged on a carrier (6), an intrinsic measuring device (8) for measuring the capacity between a first electrode (E2) in the form of a measuring electrode, and a second electrode (E1) in the form of a counter-electrode, and a controllable switching device (7) for connecting the electrodes (E1, E2, ... , En) in the form of first and second electrodes (E2, E1) to the measuring device (8) in such a way that they can be switched in a pre-determinable manner, it being possible for each electrode (E1, E2, ..., En) of the electrode arrangement to be switched by the switching device (7) in a controlled, alternate manner in the form of a measuring electrode, and it being possible here for respectively at least one of the other electrodes (E1, E2, ..., En), in the form of a counter-electrode, to be switched to a pre-determinable reference potential, **characterised in that** all of the electrodes (E1, E2, ..., En) that are not switched in the form of a measuring electrode are switched in the form of a counter-electrode, and that all of the electrodes (E1, E2, ..., En) switched in the form of a counter-electrode are switched to the reference potential.

2. The device (5) according to Claim 1, **characterised in that** the pre-determinable reference potential is the mass potential of the measuring device (8).

3. The device (5) according to either of Claims 1 to 2, **characterised in that** all of the electrodes (E1, E2, ..., En) have a substantially identical contour and surface.

4. The device (5) according to any of Claims 1 to 3, **characterised in that** all of the electrodes (E1, E2, ..., EN) are arranged substantially equidistantly.

5. The device (5) according to any of Claims 1 to 4, **characterised in that** a plurality of electrodes (E1', E1"; E2', E2"; ...; En', En") preferably respectively not directly adjacent to one another, are connected, hard-wired, to a respective electrode group, and that controlled alternately by the switching device (7) each electrode group can be switched in the form of a measuring electrode, and the other electrode groups in the form of a counter-electrode can be switched here to the reference potential.

6. The device (5) according to any of Claims 1 to 5, **characterised in that** the electrodes (E1, E2, ..., En) can be applied together with the connecting conductor paths (14) to the carrier (6) using the thin or thick layer technique.

7. The device (5) according to any of Claims 1 to 6, **characterised in that** the device (5) has a connection device (17) for connecting further sensors (15) and/or for connecting to the switching device (7).

8. The device (5) according to any of Claims 1 to 7, **characterised in that** the controllable switching device 7, the measuring device 8 and preferably also a downstream evaluation device (9) are integrated into a microcontroller or microprocessor.

9. A method for measuring capacity with an electrode arrangement comprising a plurality of electrodes (E1, E2, ..., En) which are adjacently and/or successively arranged on a carrier (6), an intrinsic measuring device (8) for measuring the capacity between a first electrode (E2) in the form of a measuring electrode, and a second electrode (E1) in the form of a counter-electrode, and a controllable switching device (7) by means of which the electrodes (E1, E2, ..., En) in the form of first and second electrodes (E2, E1) are connected to the measuring device (8) in such a way that they can be switched in a pre-determinable manner, each electrode (E1, E2, ..., En) of the electrode arrangement in the form of a measuring electrode being switched by the switching device (7), controlled alternately, and respectively at least one of the other electrodes (E1, E2, ..., En), in the form of a counter-electrode, being switched here to a pre-determinable reference potential, **characterised in that** all of the electrodes (E1, E2, ..., En) that are not switched in the form of a measuring electrode are switched in the form of a counter-electrode, and that all of the electrodes (E1, E2, ..., En) switched in the form of counter-electrodes are switched to the reference potential.

10. The method according to Claim 9, **characterised in that** the switching device is controlled by a microprocessor according to a stored control programme.

11. An appliance (1) for determining the level (2) of a liquid (3) in a container (4) with a device (5) according to any of Claims 1 to 8 and an evaluation device (9) downstream of the intrinsic measuring device (8) which determines the filling level (2) from the capacity measured with the device (5) by comparing with stored reference values.

12. The appliance (1) according to Claim 11, **characterised in that** the liquid (3) and/or at least parts of a wall of the container (4) are switched to the reference potential.

13. The appliance (1) according to Claim 11 or 12, **characterised in that** in the device (5) for measuring capacity a plurality of electrodes (E1', E1"; ...; E5', E5"), preferably not respectively adjacent to one another, are connected, hard-wired, to a respective electrode group, and that controlled alternately by the switching device (7) every electrode group can be switched in the form of a measuring electrode, and here the other electrode groups are switchable in the form of counter-electrodes to the reference potential.

14. The appliance (1) according to any of Claims 11 to 13, **characterised in that** the wiring of the electrode groups both with regard to the number of electrodes combined in a group and with regard to the relative position of the electrodes combined in a group is implemented in relation to the whole electrode arrangement such that the assignment of the measured capacity value to a resulting filling level (2) undertaken by the appliance (1) in order to determine the filling level (2) is clear.

15. The appliance (1) according to any of Claims 11 to 14, **characterised in that** the electrodes are disposed on the inside of a pipe (16) that can be immersed in the liquid.

16. The appliance (1) according to Claim 15, **characterised in that** the pipe (16) has, at least partially on its side facing towards the liquid, a coating, preferably over the whole surface.

## Revendications

1. Dispositif (5) de mesure de la capacité, comprenant un agencement d'électrodes constitué d'une pluralité d'électrodes (E1, E2, ..., En), pour un dispositif (8) proprement dit de mesure pour la mesure de la capacité entre une première électrode (E2) comme électrode de mesure et une deuxième électrode (E1) comme contre-électrode, ainsi qu'un dispositif (7) de commutation pouvant être commandé, pour relier d'une manière pouvant être commutée de façon prescrite les électrodes (E1, E2, ..., En) en première et deuxième électrode (E2, E1) au dispositif (8) de mesure, dans lequel, sous la commande du dispositif (7) de commutation, chaque électrode (E1, E2, ..., En) de l'agencement d'électrodes peut être commutée en alternance en électrode de mesure et ainsi respectivement au moins l'une des autres électrodes (E1, E2, ..., En) peut être mise en contre-électrode à un potentiel de référence pouvant être prescrit, **caractérisé en ce que** toutes les électrodes (E1, E2, ..., En) qui ne sont pas montées en électrode de mesure, sont montées en contre-électrode et **en ce que** toutes les électrodes (E1, E2, ..., En) montées en contre-électrode sont mises au potentiel de référence.

2. Dispositif (5) suivant la revendication 1, **caractérisé en ce que** le potentiel de référence qui peut être prescrit est le potentiel de masse du dispositif (8) de mesure.

3. Dispositif (5) suivant l'une des revendications 1 à 2, **caractérisé en ce que** toutes les électrodes (E1, E2, ... En) ont un contour et une surface sensiblement identiques.

4. Dispositif (5) suivant l'une des revendications 1 à 3, **caractérisé en ce que** toutes les électrodes (E1, E2, ... En) sont disposées d'une façon sensiblement équidistantes.

5. Dispositif (5) suivant l'une des revendications 1 à 4, **caractérisé en ce que** plusieurs électrodes (E1', E1" ; E2', E2" ;... ; En', En") qui, de préférence, ne sont pas respectivement immédiatement voisines, sont montées en étant câblées d'une manière fixe en respectivement un groupe d'électrodes et **en ce que**, sous la commande du dispositif (7) de commutation, chaque groupe d'électrodes peut être monté en alternance en électrode de mesure et ainsi les autres groupes d'électrodes peuvent être mis en contre-électrode au potentiel de référence.

6. Dispositif (5) suivant l'une des revendications 1 à 5, **caractérisé en ce que** les électrodes (E1, E2, ..., En) sont déposées ensemble avec des pistes (14) conductrices de connexion sur le support (6) suivant une technique en couche mince ou en couche épaisse.

7. Dispositif (5) suivant l'une des revendications 1 à 6, **caractérisé en ce que** le dispositif (5) comporte un dispositif (17) de liaison, pour la liaison d'autres capteurs (15) et/ou pour la liaison avec le dispositif (7) de commutation.

8. Dispositif (5) suivant l'une des revendications 1 à 7, **caractérisé en ce que** le dispositif (7) de commutation qui peut être commandé et le dispositif (8) de mesure et, de préférence aussi, un dispositif (9) d'exploitation en aval sont intégrés dans un microcontrôleur ou dans un microprocesseur.

9. Procédé de mesure d'une capacité par un agencement d'électrodes constitué d'une pluralité d'électrodes (E1, E2, ..., En) montées sur un support (6) les unes à côté des autres et/ou les unes derrière les autres d'un dispositif (8) proprement dit de mesure, pour mesurer la capacité entre une première électrode (E2) comme électrode de mesure et une deuxième électrode (E1) comme contre-électrode, ainsi qu'un dispositif (7) de commutation qui peut être commandé et au moyen duquel les électrodes (E1, E2, ..., En) sont reliées en pouvant être commutées d'une manière prescrite en première et deuxième électrode (E1, E2) au dispositif (8) de mesure, dans lequel sous la commande du dispositif (7) de commutation, chaque électrode (E1, E2, ..., En) de l'agencement d'électrodes est montée en alternance en électrode de mesure et ainsi respectivement au moins l'une des autres électrodes (E1, E2, ..., En) est mise en contre-électrode à un potentiel de référence pouvant être prescrit, **caractérisé en ce que** l'on monte toutes les électrodes (E1, E2, ..., En) qui ne sont pas montées en électrode de mesure en contre-électrode et **en ce que** l'on met au potentiel de référence toutes les électrodes (E1, E2, ..., En) montées en contre-électrode.

10. Procédé suivant la revendication 9, **caractérisé en ce que** l'on commande un dispositif de commutation par un microprocesseur suivant un programme de commande mémorisé.

11. Système (1) de détermination du niveau (2) d'un liquide (3) dans une cuve (4) comprenant un dispositif (5) suivant l'une des revendications 1 à 8 et un dispositif (9) d'exploitation en aval du dispositif (8) proprement dit de mesure, qui détermine le niveau (2) à partir de la capacité mesurée par le dispositif (5) par comparaison avec des valeurs de référence mémorisées.

12. Système (1) suivant la revendication 11, **caractérisé en ce que** le liquide (3) et/ou au moins des parties d'une paroi de la cuve (4) sont mis aussi au potentiel de référence.

13. Système (1) suivant la revendication 11 ou 12, **caractérisé en ce que**, dans le dispositif (5) de mesure de la capacité, plusieurs électrodes (E1' , E1" ; E2', E2" ; ... ; En', En") qui, de préférence, ne sont pas respectivement immédiatement voisines, sont montées en étant câblées d'une manière fixe en respectivement un groupe d'électrodes et **en ce que**, sous la commande du dispositif (7) de commutation, chaque groupe d'électrodes peut être monté en alternance en électrode de mesure et ainsi les autres groupes d'électrodes peuvent être mis en contre-électrode au potentiel de référence.

14. Système (1) suivant l'une des revendications 1 à 13, **caractérisé en ce que** le câblage des groupes d'électrodes, tant en ce qui concerne le nombre des électrodes rassemblées dans un groupe qu'également en ce qui concerne la position relative des électrodes rassemblées dans un groupe par rapport à tout l'agencement d'électrodes, s'effectue de manière à ce que l'association, s'effectuant par le système (1) de détermination du niveau (2) de la valeur de la capacité qui est mesurée à un niveau (2) qui en résulte, soit univoque.

15. Système (1) suivant l'une des revendications 11 à 14, **caractérisé en ce que** les électrodes sont disposées sur le côté intérieur d'un tube (16) qui peut plonger dans le liquide.

16. Système (1) suivant la revendication 15, **caractérisé en ce que** le tube (16) a sur son côté tourné vers le liquide, un revêtement, au moins en partie, de préférence sur toute la surface.
